# EUROPEAN PATENT SPECIFICATION

(11) **EP 1 607 439 B1**
(45) Date of publication and mention of the grant of the patent: **18.07.2007**
(21) Application number: 04709369.5
(22) Date of filing: 09.02.2004
(51) Int. Cl.: C08L 21/00, C08K 3/36, C08L 63/08, C08L 9/00, C08C 19/06

(54) **RUBBER COMPOSITION, CROSSLINKABLE RUBBER COMPOSITIONS, AND CROSSLINKED ARTICLES**
KAUTSCHUKZUSAMMENSETZUNG, VERNETZBARE KAUTSCHUKZUSAMMENSETZUNGEN UND VERNETZTER ARTIKEL
COMPOSITION DE CAOUTCHOUC, COMPOSITIONS DE CAOUTCHOUC RETICULABLE ET ARTICLES RETICULES

(30) Priority: 12.02.2003 JP 2003034189
(43) Date of publication of application: 21.12.2005
(73) Proprietor: KURARAY CO., LTD., Kurashiki-shi, Okayama 710-8622 (JP)
(72) Inventor: KITAYAMA, Koji, Kashima-gun, Ibaraki 314-0197 (JP); HIRATA, Kei, Kashima-gun, Ibaraki 314-0197 (JP); YAMADA, Tsutomu, Kashima-gun, Ibaraki 314-0197 (JP); KANBARA, Hiroshi, Kashima-gun, Ibaraki 314-0197 (JP); MAEDA, Mizuho, Kashima-gun, Ibaraki 314-0197 (JP)
(74) Representative: Alcock, David
(86) International application number: PCT/JP2004/001317
(87) International publication number: WO 2004/072173

(56) References cited:
- EP-A- 0 644 235
- EP-A- 0 654 364
- EP-A- 1 236 768
- WO-A-01/14470
- WO-A-02/26878
- GB-A- 978 715
- JP-A- 2 060 948
- JP-A- 7 292 159
- JP-A- 10 001 564
- US-A- 5 489 628
- PATENT ABSTRACTS OF JAPAN vol. 1996, no. 03, 29 March 1996 (1996-03-29) & JP 07 292159 A (KURARAY CO LTD), 7 November 1995 (1995-11-07)

## Description

### FIELD OF THE INVENTION

The present invention relates to rubber compositions, crosslinkable compositions and crosslinked articles, which are favorably used for tires, industrial products and other applications.

### BACKGROUND OF THE INVENTION

In the rubber material field, a crosslinked rubber composition (crosslinked article) obtained by crosslinking the mixture of a rubber, a silica, and a crosslinking agent, is generally used in order to improve mechanical properties such as tensile strength, abrasion resistance, and tear strength and also impart various physical properties such as heat resistance, and oil resistance, as usage.

A crosslinkable rubber compositon mixed with a silica has been generally used for a tread part of a automobile tire, in order to cope with a need for high milage of automobiles by decreasing rolling resistance of tires.

In the case of mixing a silica with a rubber, particularly with a diene rubber, it is well-known that simply mixing a silica with a diene rubber induces the viscosity increase of the whole resulting composition and it deteriorates the processability, because a silica has poor miscibility with a diene rubber. As a procedure of improving the problem, proposed is a method such that a plasticizer such as oil is added in mixing a silica with a diene rubber, in order to lower the viscosity of the whole composition and improve processability. However, in this method, the resulting crosslinked rubber composition (crosslinked article) has a problem of hardly avoiding the deterioration of mechanical properties such as tensile properties, flexural properties, because the plasticizer dose not contribute to crosslinking.

To improve the problem of the deterioration of mechanical properties and also improve silica dispersibility, disclosed is a rubber composition having high processability and improved silica dispersibility, which is produced by mixing a liquid polyisoprene rubber having a terminal functional group with silica and rubber (JP-A-H07-292159).

Furthermore, disclosed is a rubber composition, which is obtained by mixing a rubber having olefinc unsaturated bonds with the silica on which a liquid epoxidized butadiene polymer having a specific molecular weight is predispersed (JP-A-2001-261897).

The processability of the rubber composition disclosed in JP-A-07-292159 is somewhat improved but the mechanical properties of the resulting crosslinked rubber composition (crosslinked article) cannot not be sufficiently improved. As for the rubber composition disclosed in JP-A-2001-261897, the improvement on the mechanical properties of the crosslinked rubber composition (crosslinked article), which is the final article, is still insufficient.

GB978715 discloses uncured synthetic rubber compounds having improved processing qualities and to vulcanizates having improved properties. GB978715 teaches that the processing qualities of uncured synthetic rubber compounds can be improved, while at the same time improving the properties of the vulcanizates by blending together an elastomeric copolymer of butadiene and styrene having a butadiene to styrene ratio in the range of 70:30 to 80:20, a liquid epoxidized polybutadiene having an epoxy oxygen content of 2-10% by weight, a vulcanizing agent and other optional additives.

Further, it is has been disclosed that a crosslinked rubber composition can be produced without adding additional crosslinking agents. EP1236768 and WO0114470 are both concerned with processes for producing tyres for vehicle wheels, which can be carried out in the substantial absence of additional crosslinking agents.

Further, it is known that silica can be used as an effective filler in rubber compositions. EP0644235 discloses a sulphur cured rubber composition comprising epoxidized rubber, a silica filler, a silica coupling agent and a further rubber. The invention describes that certain combinations of silica with a silica coupling agent can exhibit a similar reinforcing effect to that of using exclusively carbon black. EP0654364 discloses the use of silicic acid in combination with carbon black as a filler in the production of rubber compositions for use as tyres.

It may also be that the rubber composition contains other forms of functionalised rubber in addition to epoxidized rubber. US5489628 discloses a sulphur cured rubber composition containing carboxylic nitrile rubber.

Methods of production that reduce that sulphur content and thus the volatility of the crosslinked components have also been disclosed. WO02/2 discloses a method for producing a tyre wherein the process involves the coupling of a first component, obtained by cross-linking an elastomeric material which is cross-linkable in substantial absence of sulphur, with a second component, obtained by cross-linking an elastomeric material which is cross-linkable with sulphur.

Accordingly, it is an object of the invention to provide a rubber composition having improved silica dispersibility in the case of mixing a silica with a diene rubber, excellent processability, and excellent mechanical properties after crosslinking.

### DISCLOSURE OF THE INVENTION

To achieve the above object, the invention provides [1] a crosslinkable rubber composition comprising (1) a diene rubber, (2) a silica and (3) an epoxidized liquid diene rubber having a number-average molecular weight of 10000 to 100000 and an epoxy group content of 0.3 to 10 meq/g wherein based on 100 parts by mass of the diene rubber (1), the rubber composition comprises 0.1 to 150 parts by mass of silica (2) and 0.1 to 30 parts by mass of the epoxidized liquid diene rubber (3)
and a crosslinked agent; and
[2] a crosslinked article obtainable by crosslinking the crosslinkable rubber composition as described in [1].

### PREFERRED EMBODIMENTS OF THE INVENTION

A diene rubber (1) used in the present specification is a rubbery polymer primarily comprising conjugated diene compounds such as butadiene, and isoprene. Examples of the diene rubbers (1) may include natural rubber (NR), polyisoprene rubber (IR), polybutadiene rubber (BR), styrene-butadiene copolymer rubber (SBR), styrene-isoprene-butadiene copolymer rubber, acrylonitrile-butadiene copolymer rubber, and chloroprene rubber. The diene rubbers may be used singly or in combination of two or more kinds.

A silica (2) used in the present specification is not particularly limited as long as it is conventionally used as a rubber reinforcing agent. Examples thereof may include dry process white carbon, wet process white carbon, synthetic silicate type white carbon, colloidal silica and precipitated silica. The specific surface area of the silica (2) is not particularly limited, and it may be in the range of 40 to 600 m²/g. Preferably, the specific surface area is 70 to 300 m²/g. The silicas (2) may be used singly or in combination of two or more kinds.

Epoxidized liquid diene rubbers (3) in the present specification are obtained by epoxidizing carbon-carbon double bonds in the liquid diene rubbers such as liquid polybutadiene, liquid polyisoprene, liquid styrene-butadiene random copolymer, liquid styrene-butadiene block copolymer, liquid butadiene-isoprene random copolymer, liquid butadiene-isoprene block copolymer, liquid styrene-butadiene-isoprene random copolymer, and liquid styrene-butadiene-isoprene block copolymer. The epoxidized liquid diene rubber has a number-average molecular weight of 10000 to 100000, preferably 15000 to 70000. When the number-average molecular weight of the epoxidized liquid diene rubber (3) is lower than 10000, the mechanical properties of a crosslinked article prepared from a crosslinkable rubber composition are largely lowered. On the other hand, when the number-average molecular weight exceeds 100000, the processability of preparing a rubber composition and a crosslinkable rubber composition is deteriorated.

As used herein, the number-average molecular weight is in terms of polystyrene according to gel permeation chromatography (GPC).

The epoxidized liquid diene rubbers (3) may be used singly or in combination of two or more kinds. Of the epoxidized liquid diene rubbers (3), a epoxidized liquid polyisoprene is preferable from the viewpoint of giving good performance of the rubber composition, the crosslinkable rubber composition and the crosslinked article of the invention.

There is particularly no limitation on the process for producing liquid diene rubber that is a material of the epoxidized liquid diene rubber (3). For example, anionic polymerization can be used. The anionic polymerization may be performed in an inert gas atmosphere such as argon or nitrogen, in a solvent inactive in the polymerization such as hexane, cyclohexane, benzene or toluene, with use of an initiator such as an alkali metal (e.g., metallic sodium or metallic lithium) or an alkyllithium compound (e.g., methyllithium, ethyllithium, n-butyllithium or s-butyllithium), at a polymerization temperature of -100 to 100°C, and over a period of 0.01 to 200 hours.

Subsequently, the liquid diene rubber obtained is epoxidized at a carbon-carbon double bond to give an epoxidized liquid diene rubber (3). The process of epoxidation is not particularly limited, and exemplary processes include (i) treatment with a peracid such as peracetic acid (JP-A-H08-134135), (ii) treatment with a molybdenum complex and t-butylhydroperoxide (J. Chem. Soc., Chem. Commun., P.1686 (1989)), (iii) treatment with a tungstic acid catalyst and hydrogen peroxide (J. Polym. Sci., C, Vol. 28, P.285 (1990)), and (iv) treatment with a tungsten compound selected from ammonium tungstate and phosphotungstic acid, a quaternary ammonium salt, phosphoric acid, and an aqueous hydrogen peroxide solution (JP-A-2002-249516).

A part to be epoxidized is not particularly limited. Epoxy groups may be introduced into random parts in a diene rubber molecular chain or particular parts of the diene rubber, e.g. carbon-carbon double bond parts derived from isoprene may be selectively epoxidized. For example, a epoxidized liquid diene rubber (3) having epoxidized terminal block part may be prepared by epoxidizing selectively a polyisoprene block of a liquid butadiene-isoprene diblock copolymer.

The epoxy group content of the epoxidized liquid diene rubber (3) is 0.3 to 10 meq/g from the viewpoint of giving good performance of the crosslinkable rubber composition and the crosslinked article of the invention.

The rubber composition according to the invention may contain a silane-coupling agent, which is conventionally used in mixing a rubber composition with silica, as an additive. Examples of the silane coupling agents may include vinyltrichlorosilane, vinyltriethoxysilane, vinyltris(β-methoxy-ethoxy)silane, β-(3,9-epoxycyclohexyl)-ethyltrimethoxysilane, 3-chloropropyltrimethoxysilane, 3-chloropropyltriethoxysilane, 3-mercaptopropyltrimethoxysilane, 3-mercaptopropyltriethoxysilane, bis(3-triethoxysilyl)propyl)tetrasulfide, and bis(3-(triethoxysilyl)propyl)disulfide.

The rubber compositions according to the invention may contain carbon blacks such as furnace black, acetylene black, thermal black, channel black, and graphite and organic fibers such as polyamide fiber as conventional reinforcing agents, while still satisfying their properties. Additionally, the rubber compositions according to the invention may contain compounding agents such as plasticizers (e.g. oil), antioxidants, and fillers, while still satisfying their properties.

The rubber composition according to the invention may be produced by a general method. For example, it is produced by mixing the diene rubber (1), the silica (2), the epoxidized liquid diene rubber (3), and optionally other additives according to the prescribed amounts using a Brabender, Banbury mixer, roll kneader or the like.

Next, the crosslinkable rubber composition of the invention will be described. The crosslinkable rubber composition contains a conventional crosslinking agent of rubber without particular limitation. Examples of the crosslinking agents may include sulfur crosslinking agents such as sulfur, morpholine disulfide, and alkyl phenol disulfide; and organic peroxide crosslinking agents such as cyclohexanone peroxide, methylacetoacetate peroxide, tert-butyl peroxyisobutyrate, tert-butyl peroxybenzoate, benzoyl peroxide, lauroyl peroxide, dicumyl peroxide, di-tert-butyl peroxide, and 1,3-bis(tert-butyl peroxyisopropyl)benzene.

The crosslinkable rubber composition according to the invention may contain optionally a crosslinking accelerator or a coagent. The crosslinking accelerator or the coagent is not particularly limited and may be appropriately selected in accordance with the crosslinking agent. Examples of the crosslinking accelerators may include thiuram accelerators such as tetramethylthiuram monosulfide, tetramethylthiuram disulfide, and tetraethylthiuram disulfide; thiazole accelerators such as 2-mercaptobenzothiazole, and dibenzothiazyl disulfide; sulfeneamide accelerators such as N-cyclohexyl-2-benzothiazyl sulfeneamide, and N-oxy diethylene-2-benzothiazolyl sulfeneamide; guanidine accelerators such as diphenyl guanidine, and di-ortho-tolyl guanidine; aldehyde-amine accelerators such as a condensation product of n-butylaldehyde and aniline, and a condensation product of butylaldehyde and monobutylamine; aldehyde-ammonia accelerators such as hexamethylene tetramine; and thiourea accelerators such as thiocarbanilide. In the case of blending the crosslinking accelerators, the crosslinking accelerators may be used singly or in combination of two or more kinds.

Examples of the coagents may include metal oxides such as zinc oxide, and magnesium oxide; metal hydroxides such as calcium hydroxide; metal carbonates such as zinc carbonate, and basic zinc carbonate; aliphatic acids such as stearic acid, and oleic acid; aliphatic metal salts such as zinc stearate, and magnesium stearate; amines such as di-n-butylamine, and dicyclohexylamine; ethylenedimethacrylate, diallylphthalate, N,N-m-phenylenedimaleimide, triallyl isocyanurate, and trimethylolpropane trimethacrylate. In the case of blending the coagents, the coagents may be used singly or in combination of two or more kinds.

The crosslinkable rubber composition according to the invention may be produced by a general method. For example, it is produced by mixing the diene rubber (1), the silica (2), the epoxidized liquid diene rubber (3), the crosslinking agent and optionally the crosslinking accelerator, the coagent and the like according to the prescribed amounts using a Brabender, Banbury mixer, roll kneader or the like.

Further, the crosslinked article may be obtained, for example, by press curing the above crosslinkable rubber composition using press-molding machine, or by mold curing it.

According to the present invention, a rubber composition having improved silica dispersibility in the case of mixing a silica with a diene rubber, excellent processability, and excellent mechanical properties after crosslinking can be obtained.

The present invention will be hereinafter described in greater detail by Examples. But it should be construed that the invention is in no way limited to those Examples.

### Reference Example 1

(1) A 5-liter autoclave purged with nitrogen was charged with 2000 g of hexane and 2.5 g of n-butyllithium, followed by heating to 50°C. Subsequently, 650 g of isoprene was added and polymerization was carried out for 3 hours. Part of the reaction liquid was sampled to analyze the product by GPC, which showed that a liquid polyisoprene had occurred which had a number-average molecular weight (Mn) of 27000 in terms of polystyrene, and a molecular weight distribution (Mw/Mn) of 1.16.
(2) 300 g of the polymerization solution obtained in (1) above was washed with water and was introduced into a 1-liter autoclave. Further, 0.16 g of phosphotungstic acid, 0.15 g of phosphoric acid, 13 g of a 35% by mass aqueous solution of hydrogen peroxide, 90 g of water and 0.26 g of trioctylmethylammonium chloride were added, and reaction was performed at 80°C for 3 hours. The resulting reaction liquid was poured into methanol to reprecipitate the polymer, and the polymer was filtered out and was vacuum dried at 80°C for 7 hours to give 70 g of an epoxidized liquid polyisoprene. GPC analysis of the obtained epoxidized liquid polyisoprene resulted in Mn=28000 and Mw/Mn=1.16. Approximately 0.5 g of the obtained epoxidized liquid polyisoprene was weighed out and was dissolved in 10 ml of tetrahydrofuran (THF) at 25°C. The solution was combined with 10 ml of a solution of 0.2N hydrochloric acid in THF, and the mixture was stirred for 30 minutes to perform reaction of the epoxy group in the epoxidized liquid polyisoprene with the hydrochloric acid. The excess of hydrochloric acid was titrated using a solution of 0.1N potassium hydroxide in ethanol to determine the epoxy number to be 1.5 meq/g.

### Example 1

(1) Styrene butadiene rubber (SBR, Trade Name JSR1502 manufactured by JSR Corp.), silica (Trade Name Nipsil VN-3 manufactured by Nippon silica Glass Co., Ltd.), epoxidized liquid polyisoprene obtained in Reference Example 1, aromatic oil (Trade Name Aroma oil X-140, manufactured by Japan Energy Corporation), diethylene glycol, zinc white, stearic acid and an antioxidant (Trade Name NOCRAC 6C, N-(1,3-dimethylbutyl)-N'-phenyl-p-phenylenediamine manufactured by Ouchi Shinko Chemical Industrial Co., Ltd.) were kneaded for 5 minutes and 30 seconds in a Banbury mixer set at 80°C in accordance with the compounding ratio shown in Table 1. Next, the resulting compound was mixed with sulfur, a crosslinking accelerator (Trade Name NOCCELER CZ, N-cyclohexyl-2- benzothiazylsulfenamide manufactured by Ouchi Shinko Chemical Industrial Co., Ltd.) and a coagent dicyclohexylamine on a roll mill set at 55°C to give a crosslinkable rubber composition in accordance with the compounding ratio shown in Table 1. The Mooney viscosity of the resulting crosslinkable rubber composition at 100°C was measured in accordance with JIS K 6300 to evaluate the processability using the value ML₁₊₄. The lower the value is, the better the processability is.
(2) The crosslinkable rubber composition obtained in the step (1) was press cured at 160°C for 15 minutes to give a 2 mm thick sheet of the crosslinked rubber composition (crosslinked article) for tensile test.
   The hardness of the resulting crosslinked article sheet was measured by a type A durometer in accordance with JIS K 6250. From the resulting crosslinked article sheet, a type 3 dumbbell specimen was punched out and subjected to tensile test in accordance with JIS K 6251. 300% modulus, break strength and extension at break of the specimen were measured. The results are shown in Table 1.
(3) The crosslinkable rubber composition obtained in the step (1) was mold cured at 160°C for 30 minutes to prepare a specimen for flex test in accordance with JIS K 6260. In the center hollow part of the specimen, a 2 mm notch was made and the specimen was subjected to flex crack growth test in accordance with JIS K 6260. The flex crack growth was evaluated by the average flexure frequency of three specimens until the crack grew to 8 mm length. The results are shown in Table 1.

### Comparative Example 1

a crosslinked article was obtained by the procedure of Example 1, except that epoxidized liquid polyisoprene was not added. The hardness, the results of the tensile test and the flex cracking growth test of the resulting crosslinked article are shown in Table 1.

**Table 1**

| Compounding | | Example 1 | Comparative Example 1 |
|---|---|---|---|
| SBR 1) | | 100 | 100 |
| Epoxidized liquid polyisoprene | | 4.5 | |
| Silica 2) | | 50 | 50 |
| Aromatic oil | | 10 | 10 |
| Diethylene glycol | | 5 | 5 |
| Zinc white | | 3 | 3 |
| Stearic acid | | 2 | 2 |
| Dicyclohexyl amine | | 3 | 3 |
| Sulfur | | 2 | 2 |
| NOCRAC 6C 4) | | 2 | 2 |
| NOCCELER CZ 5) | | 1 | 1 |

| Physical properties of non-crosslinked composition | | | |
|---|---|---|---|
| | Mooney viscosity (ML₁₊₄ 100°C) | 47.3 | 50.9 |

| Physical properties of crosslinked article | | | |
|---|---|---|---|
| | 300% Modulus (MPa) | 3.38 | 2.12 |
| | Break strength (MPa) | 18.5 | 21.1 |
| | Extension at break (%) | 700 | 730 |
| | Hardness (JIS Type A) | 57 | 57 |
| | Flex crack growth test (flexure frequency) | 2700 | 1800 |

| | | | |
|---|---|---|---|
| 1) SBR (JSR1502 manufactured by JSR Corp.), 2) Silica (Nipsil VN-3 manufactured by Nippon silica Glass Co., Ltd.), 3) Aromatic oil (Aroma oil X-140, manufactured by Japan Energy Corporation), 4) Antioxidant (N-(1,3-dimethylbutyl)-N'-phenyl-p-phenylenediamine manufactured by Ouchi Shinko Chemical Industrial Co., Ltd.), and 5) Crosslinking accelerator (N-cyclohexyl-2-benzothiazylsulfenamide manufactured by Ouchi Shinko Chemical Industrial Co., Ltd.). | | | |

As is clear from Table 1, the Mooney viscosity of the crosslinkable rubber composition obtained in Example 1 is lower than that of the crosslinkable rubber composition obtained in Comparative Example 1. Therefore, the processability is improved.

The crosslinked article of the crosslinkable rubber composition obtained in Example 1 has the approximately same break strength, extension at break and hardness as compared with that of the crosslinkable rubber composition obtained in Comparative Example 1. However 300% Modulus and the result in the Flex cracking growth test is remarkably excellent.

### Examples 2 and 3

(1) Styrene butadiene rubber (SBR, Trade Name JSR1502 manufactured by JSR Corp.), silica (Trade Name Nipsil VN-3 manufactured by Nippon silica Glass Co., Ltd.), epoxidized liquid polyisoprene obtained in Reference Example 1, naphthenic oil (Trade Name Sunthene 4240, manufactured by Sunoco, Inc.), and an antioxidant (Trade Name NOCRAC 6C, N-(1,3-dimethylbutyl)-N'-phenyl-p-phenylenediamine manufactured by Ouchi Shinko Chemical Industrial Co., Ltd.) were kneaded for 32 minutes on a roll mill set at 90°C in accordance with the compounding ratio shown in Table 2. Next, the resulting compound was mixed with zinc white, stearic acid, sulfur, a crosslinking accelerator (Trade Name NOCCELER CZ, N-cyclohexyl-2-benzothiazyl sulfenamide manufactured by Ouchi Shinko Chemical Industrial Co., Ltd.) and a coagent dicyclohexylamine for 10 minutes on a roll mill set at 60°C to give a crosslinkable rubber composition in accordance with the compounding ratio shown in Table 2. The Mooney viscosity of the resulting crosslinkable rubber composition at 100°C were measured in accordance with JIS K 6300 to evaluate the processability using the value ML₁₊₄. The lower the values is, the better the processability is.
(2) The crosslinkable rubber composition obtained in the step (1) was press cured at 160°C for 15 minutes to give a 2 mm thick sheet of the crosslinked rubber composition (crosslinked article).
   The hardness of the resulting crosslinked article sheet was measured by a type A durometer in accordance with JIS K 6250. From the resulting crosslinked article sheet, a type 3 dumbbell specimen was punched out and subjected to tensile test in accordance with JIS K 6251. 300% modulus, break strength and extension at break of the specimen were measured. Further, the crosslinked sheet was punched out to give an angle type specimen without notch in accordance with JIS K 6252. The specimen was subjected to tearing test in accordance with JIS K 6252 and the tear strength was measured. The results are shown in Table 2.
(3) The compound without a crosslinking agent such as sulfur and a additive was obtained by kneading SBR, silica, the epoxidized liquid polyisoprene, the naphthenic oil and the antioxidant for 32 minutes on the roll mill by the procedure of the step (1). The compound was pressed at 70°C for 15 minutes to give a non-crosslinked article sheet having a thickness of 1 mm. This non-crosslinked article sheet was punched out to give circular specimens having a diameter of 8 mm, and the modulus of elasticity (G') to strain strength was measured by dynamic viscoelasticity measurement (Measuring machine: ARES manufactured by Rheometric Scientific Inc., Measuing conditions: 50°C, 10Hz). The results are shown in Table 2.

### Comparative Example 2

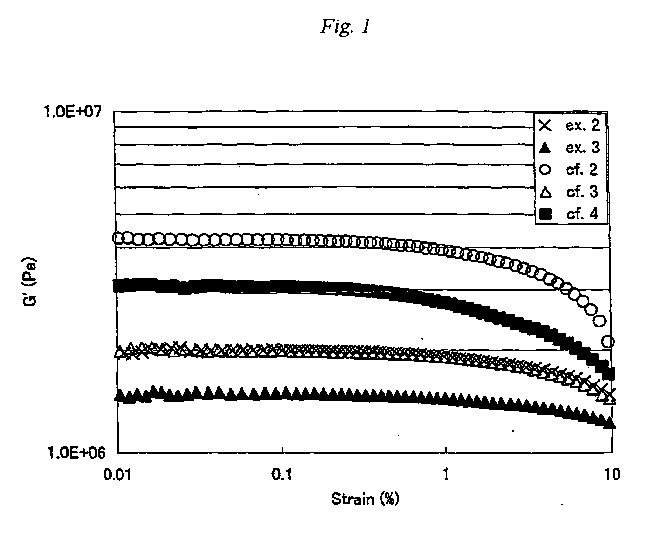

A crosslinkable rubber composition, a crosslinked article sheet, and a non-crosslinked article sheet were obtained by the procedure of Examples 2 and 3, except that epoxidized liquid polyisoprene was not added. The Moony viscosity of the resulting crosslinkable rubber composition at 100°C, the hardness of the crosslinked article sheet, and the results of the tensile test and the tearing test are shown in Table 2. The dynamic viscoelasticity measurement of the non-crosslinked article sheet is also shown in Fig. 1.

### Comparative Examples 3 and 4

A crosslinkable rubber composition, a crosslinked article sheet, and a non-crosslinked article sheet were obtained by the procedure of Examples 2 and 3, except that epoxidized liquid polyisoprene was replaced with liquid polyisoprene obtained in the step (1) of Reference Example 1 in accordance with the compounding ratio shown in Table 2. The Moony viscosity of the resulting crosslinkable rubber composition at 100°C, the hardness of the crosslinked article sheet, and the results of the tensile tests and the tearing tests are shown in Table 2. The dynamic viscoelasticity measurements of the non-crosslinked article sheets are also shown in Fig. 1.

**Table 2**

| Compounding | | Example | | Comparative Example | | |
|---|---|---|---|---|---|---|
| | | 2 | 3 | 2 | 3 | 4 |
| | SBR 1) | 90 | 80 | 100 | 90 | 80 |
| | Epoxidized liquid polyisoprene | 10 | 20 | - | - | - |
| | Liquid polyisoprene | - | - | - | 10 | 20 |
| | Silica 2) | 50 | 50 | 50 | 50 | 50 |
| | Naphthenic oil | 10 | 10 | 10 | 10 | 10 |
| | Zinc white | 5 | 5 | 5 | 5 | 5 |
| | Stearic acid | 1 | 1 | 1 | 1 | 1 |
| | Dicyclohexyl amine | 3 | 3 | 3 | 3 | 3 |
| | Sulfur | 2 | 2 | 2 | 2 | 2 |
| | NOCRAC 6C 4) | 1 | 1 | 1 | 1 | 1 |
| | NOCCELER CZ 5) | 1 | 1 | 1 | 1 | 1 |

| Physical properties of non-crosslinked composition | | | | | | |
|---|---|---|---|---|---|---|
| | Mooney viscosity (ML₁₊₄ 100°C) | 55 | 45 | 74 | 49 | 35 |

| Physical properties of crosslinked article | | | | | | |
|---|---|---|---|---|---|---|
| | 300% Modulus (MPa) | 5.1 | 5.5 | 5.0 | 4.8 | 4.0 |
| | Break strength (MPa) | 21.8 | 19.2 | 27.0 | 23.7 | 18.3 |
| | Extension at break (%) | 690 | 660 | 710 | 700 | 690 |
| | Tear strength (N/mm) | 48.0 | 47.9 | 47.8 | 47.0 | 43.9 |
| | Hardness (JIS Type A) | 60 | 60 | 67 | 53 | 53 |

| | | | | | | |
|---|---|---|---|---|---|---|
| 1) SBR (JSR1502 manufactured by JSR Corp.), 2) Silica (Nipsil VN-3 manufactured by Nippon silica Glass Co., Ltd.), 3) Naphthenic oil (Sunthene 4240, manufactured by Sunoco, Inc.,), 4) Antioxidant (N-(1,3-dimethylbutyl)-N'-phenyl-p-phenylenediamine manufactured by Ouchi Shinko Chemical Industrial Co., Ltd.), and 5) Crosslinking accelerator (N-cyclohexyl-2-benzothiazylsulfenamide manufactured by Ouchi Shinko Chemical Industrial Co., Ltd.). | | | | | | |

As is clear from Table 2, the Mooney viscosity of the crosslinkable rubber composition obtained in each of Examples 2 and 3, and Comparative Examples 3 and 4 is lower than that of the crosslinkable rubber composition obtained in Comparative Example 2. Therefore, the processability is improved.

The crosslinked article of the crosslinkable rubber composition obtained in each of Examples 2 and 3 is more excellent in 300% modulus and tear strength than that of the crosslinkable rubber compositions obtained in Comparative Examples 3 and 4. 300% modulus and tear strength tend to be lowered by increasing the blend amount of the liquid polyisoprene as shown in Comparative Examples 3 and 4. While, the composition of the invention containing epoxidized liquid polyisoprene is excellent in 300% modulus and tear strength.

### BRIEF DESCRIPTION OF THE DRAWING

Fig. 1 is a graph showing the dependence of modulus of elasticity (G') on the strain at 50° C obtained by the dynamic viscoelasticity measurement of the non-crosslinked article obtained in each of Examples 2 and 3, and Comparative Examples 2 to 4.

In general, if the silica dispersity in the rubber composition is not good, silicas form an aggregated structure by the interaction between silicas. High strain conditions induce the lowering of the modulus of elasticity (G') owing to the destruction of the aggregated structure. Meanwhile, if the silica dispersity in the rubber composition is good, even high strain conditions hardly induce the lowering of the modulus of elasticity (G') since silicas have a low aggregation structure. Therefore, the dependence of the modulus of elasticity (G') on the strain with regard to the non-crosslinked article in each of Examples and Comparative Examples can be a indicator of the silica dispersity.

As is clear from Fig. 1, the non-crosslinked article sheet obtained in each of Examples 2 and 3 has improved silica dispersity as compared with that obtained in each of Comparative Examples 2 and 4 because the lowering of the modulus of elasticity (G') under high strain condition is reduced.

Additionally, the modulus of elasticity (G') curve in Comparative Example 3 is approximately the same as that in Example 2, but in Comparative Example 3, the 300% modulus of the crosslinked article is lowered as described above.

### INDUSTRIAL APPLICABILITY

The rubber composition of the present invention has excellent processability, and the crosslinkable rubber composition prepared by adding a crosslinking agent to the rubber composition can produce the crosslinked article having improved mechanical properties. Accordingly, the rubber composition of the present invention can suitably be used for tires, industrial products such as industrial belts and industrial rubber hoses, and other applications.

## Claims

1. A crosslinkable rubber composition comprising:
(1) a diene rubber,
(2) a silica; and
(3) an epoxidized liquid diene rubber having a number-average molecular weight of 10000 to 100000 and an epoxy group content of 0.3 to 10 meq/g, wherein based on 100 parts by mass of the diene rubber (1), the rubber composition comprises 0.1 to 150 parts by mass of the silica (2), 0.1 to 30 parts by mass of the epoxidized liquid diene rubber (3) and a crosslinking agent.

2. A crosslinked article obtained by crosslinking a crosslinkable rubber composition as claimed in claim 1.

## Patentansprüche

1. Vernetzbare Kautschukzusammensetzung mit
(1) einem Dienkautschuk,
(2) einem Siliziumdioxid und
(3) einem epoxidierten flüssigen Dienkautschuk mit einem Zahlenmittel des Molekulargewichts von 10.000 bis 100.000 und mit einem Epoxygruppengehalt von 0,3 bis 10 meq/g, wobei die Kautschukzusammensetzung bezogen auf 100 Masseteile des Dienkautschuks (1) 0,1 bis 150 Masseteile des Siliziumdioxids (2), 0,1 bis 30 Masseteile des epoxidierten flüssigen Dienkautschuks (3) und ein Vernetzungsmittel umfasst.

2. Vernetzter Artikel, erhalten durch Vernetzung einer vernetzbaren Kautschukzusammensetzung, wie sie in Anspruch 1 beansprucht ist.

## Revendications

1. Composition de caoutchouc réticulable, comprenant:
(1) un caoutchouc diénique ;
(2) une silice ; et
(3) un caoutchouc diénique liquide époxydé ayant une moyenne en nombre du poids moléculaire de 10 000 à 100 000 et une teneur en groupes époxy de 0,3 à 10 meq/g, dans laquelle, sur la base de 100 parties en masse du caoutchouc diénique (1), la composition de caoutchouc comprend 0,1 à 150 parties en masse de la silice (2), 0,1 à 30 parties en masse du caoutchouc diénique liquide époxydé (3) et un agent de réticulation.

2. Article réticulé obtenu par réticulation d'une composition de caoutchouc réticulable suivant la revendication 1.
